# EUROPEAN PATENT SPECIFICATION

(11) **EP 2 760 706 B1**
(45) Date of publication and mention of the grant of the patent: **08.11.2017**
(21) Application number: 12715290.8
(22) Date of filing: 12.04.2012
(51) Int. Cl.: B60R 21/00, B60R 21/207

(54) **PELVIC AIR BAG AND ARRANGEMENT**
BECKENAIRBAG UND DESSEN ANORDNUNG
AIRBAG PELVIEN ET AGENCEMENT ASSOCIÉ

(30) Priority: 14.04.2011 US 201161475571 P
(43) Date of publication of application: 06.08.2014
(73) Proprietor: Key Safety Systems, Inc., Sterling Heights, MI 48314 (US)
(72) Inventor: KALANDEK, Bruce Andrew, Dearborn, Michigan 48124 (US); BUJAIDAR, Daniel, Washington, Michigan 48094 (US); SALMO, Shakir M., Sterling Heights, Michigan 48310 (US); YOUNG, Jeffrey, Bruce Twp., Michigan 48065 (US)
(74) Representative: Gislon, Gabriele
(86) International application number: PCT/US2012/033187
(87) International publication number: WO 2013/154560

(56) References cited:
- WO-A1-00/21797
- DE-U1- 9 303 231
- US-A- 5 536 038
- US-A1- 2004 075 254

## Description

### Background and Summary of the Invention

The present invention relates generally to air bags inflatable during a side impact crash and more particularly to an air bag designed to protect the pelvis of a vehicle occupant.

The present invention comprises a pelvic air bag configured to inflate through a seam located on the seat cushion of a vehicle seat and more particularly where the seam is located toward the rear-outboard side of this seat proximate the seat back.

More specifically the invention comprises: a system comprising a vehicle seat having a seat back and a seat cushion upon which an occupant can sit, a first portion of the seat cushion being adjacent an interior side wall of a vehicle and an air bag deployable out from the first portion positioned between a side of a pelvic region of the occupant and the side wall, wherein the first portion includes a frangible seam which can be a portion of an upholstered seam and the air bag deploys through the frangible seam. In another embodiment the air bag deploys through other portions of the cushion.

### Brief Description of the Drawings

Figure 1 shows a typical front seat incorporating the present invention.
Figure 2 shows a typical rear or bench seat incorporating the present invention.
Figure 3 schematically shows the mounting of an inflator of an air bag within a seat cushion.
Figures 3A - C show alternate mounting configurations for the inflator and air bag.
Figure 4 is substantially the same as figure 1 but showing the deployment of a pelvic bag from the seat cushion of a vehicle front seat.
Figures 5 and 6 diagrammatically shows a test data illustrating a pelvic bag emanating from the front seat cushion.
Figures 7 and 8 diagrammatically shows additional test data illustrating a pelvic bag emanating from a rear seat cushion.
Figure 9 shows two panels of woven material forming the air bag as well as a view showing the completed air bag.
Figure 10 is a view of the underside of a front seat showing the placement of an inflator and air bag.
Figures 11 - 11D show a method of folding the air bag of the present invention.
Figures 12 and 12A show an alternate method of folding the air bag.

### Detailed Description of the Drawings

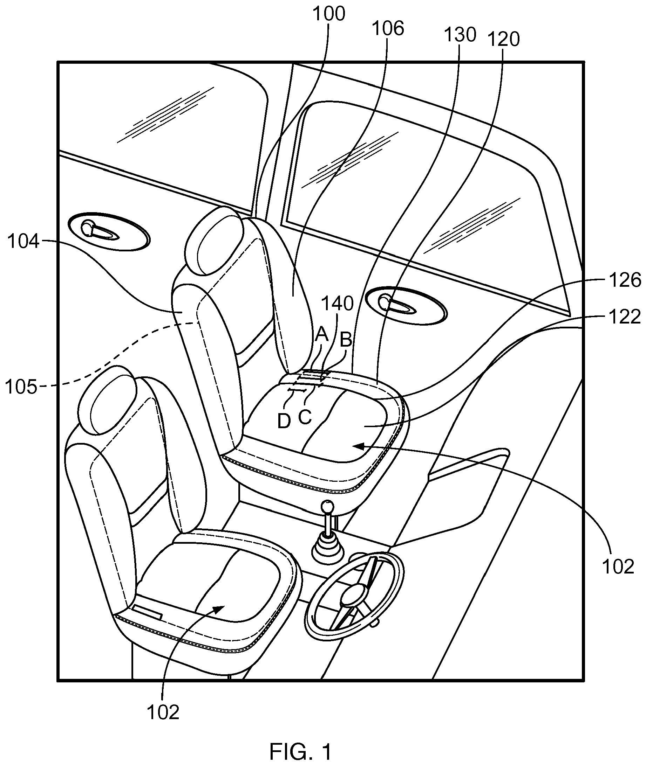

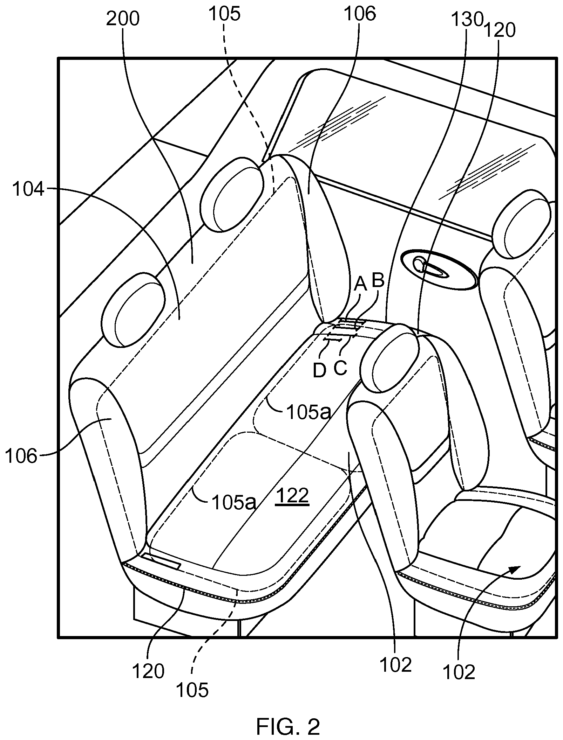

Reference is made to figures 1 and 2 which illustrate typical seats 100 and 200 used in a vehicle and which incorporate the present invention. Each seat includes a seat cushion 102, a seat back 104 and a frame105.

As mentioned above, the thrust of the present invention is to provide a pelvic air bag. The prior art shows pelvic air bags which inflate from the outboard seat bolster associated with the seat back. Additionally the prior art shows air bags which combine pelvis and thorax protection that also inflate from the seat back bolster, as well as air bags combining the function of pelvis, thorax and head protection, also emanating from the outboard seat back bolster.

Those prior air bags designed for pelvis protection are fitted to and deploy from the side bolster of the seat back and will typically break through a seam of the upholstery, deploy in a forward direction, and then deploy downwardly to place at least a portion of the bag designed for pelvis protection near the occupant's hip.

WO0021797 discloses a system comprising features according to the preamble of claim 1; the system comprises a vehicle seat and multi-function airbag having a plurality of interconnected chambers configured to be inflated simultaneously. Two of these chambers are placed on a respective side of the seat cushion.

US5536038 discloses an airbag inflated outwardly from a seat cushion through a deployment door portion. In particular, when the airbag is inflated, a stress riser portion releases the door to be moved pivotally around a hinge portion.

US2004075254 discloses a side airbag deployable from a seat cushion.

DE9303231 discloses a side airbag 3 configured for protecting the occupant from a side and from a front impact.

US2004046375 discloses an airbag module arranged in one or both side regions of a seat cushion. In the event of a crash, the airbag is inflated within the seat to prevent a seat occupant from sliding under the pelvic belt.

DE102007031622 discloses a vehicle seat comprising a seat cushion and a backrest. A pelvic airbag, housed in an airbag module is arranged for unfolding out upward from the cushion through an opening flap in the cushion.

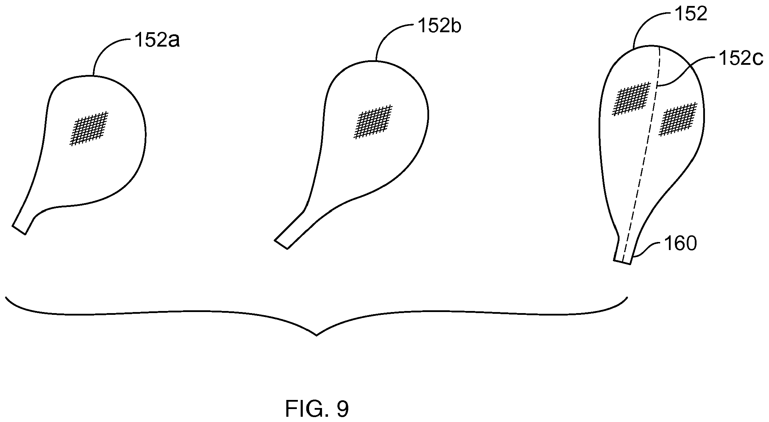

The seat cushion of the front seat or rear seat or bench seat of figures 1 and 2 also includes a bolster 120 shown as a slightly elevated portion about its visible periphery. As will be shown below, a pelvic air bag 152 of the present invention deploys through a portion of the upholstery of the seat cushion 102 also having a side bolster 106. As shown in figure 9 the air bag 152 comprises two facing panels 152a and 152b sewn together along seam 152c. The panels 152a and 1542b are substantially identical. The bag includes a narrow inlet 160.

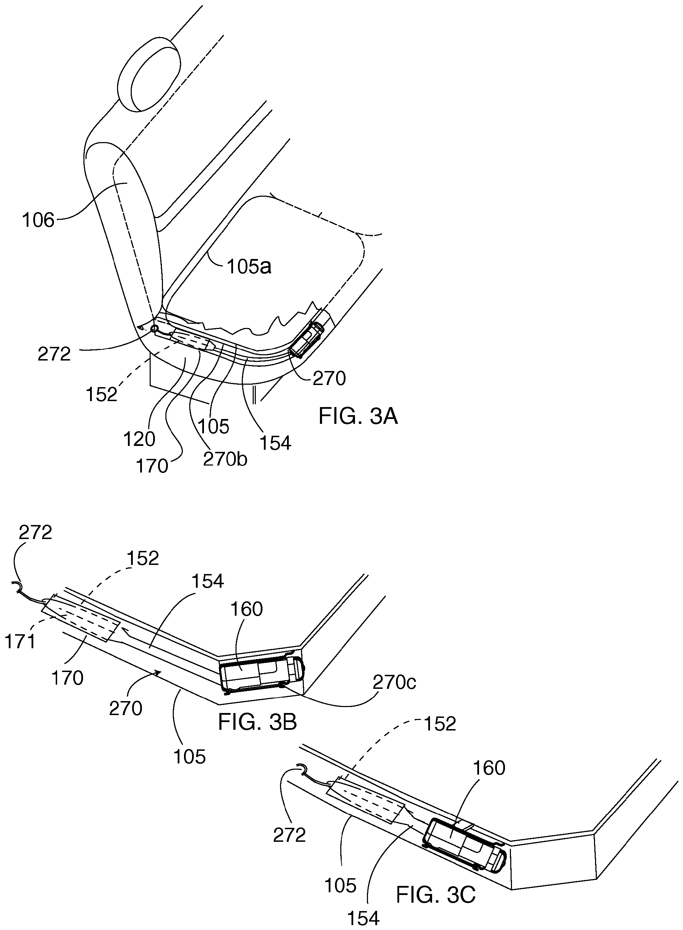

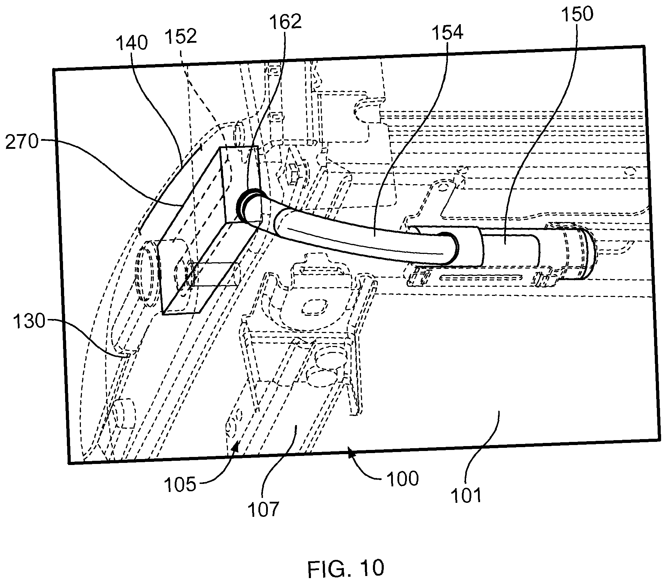

Reference is made to figure 3 which is a cross-sectional view through either the seat cushion in figure 1 or the seat cushion in figure 2. The center 122 of this seat comprises a first piece of material 124. Material 124 is connected at seam 126 to another piece of material 128 forming an inside surface of the cushion bolster 120. The material 128 is sewn at seam 130 and connected to another piece of material 132 forming the exterior of the bolster. Either seat 100 or 200 includes frame, padding or foam or other features normally associated with the vehicle seats. Figures 1 and 2 will also include characters A, B, C, D which identify possible locations of the tearable seam 140. In the preferred embodiment tearable seam 140 is a portion of top upholstery seam 130 or can also be a portion of the center upholstery seam 126. In addition, the tearable seam can be located in non-seamed regions of the bolster such as in regions B and C. Obviously, it is less costly to incorporate a tearable seam 140 as part of the upholstery seams such as 126 and 30. Reference is made to figure 10 which is a view of the underside of a front seat 100. The inflator 150 is shown mounted to a frame part in an orientation parallel to the rear 101 of the front seat 100. A fill tube 154 extends from the inflator, the inflator is located at the back of the seat, the fill tube extends to the outer side of the seat to the air bag 152 which is positioned at the outer side of seat 100. Fill tube 154 is curved so as to avoid portions of the frame 105 such as the seat rail 107. In figure 10 the air bag 152 is shown diagrammatically.

Reference is again made to figure 3 which illustrates an air bag inflator 150 connected to deployable air bag 152. The inflator 150 is mounted to seat frame 105 proximate the location of seam 140. Some seats include a pan 105a (see figure 2) below a layer of foam; the inflator 150 can also be secured to this pan. The pan is often a formed metal or plastic functioning as a reaction surface in the seat. The inflator may be connected to the air bag directly or through an extension or fill tube such as 154. A neck region 160 of the air bag 152 can be secured to the inflator or tube by clamp 162. Air bag 152 is located within a void 170 in the seat padding or foam. The sides of the void 170 are also defined by two opposing pieces of material 172 and 174 which are also secured at seam 130. As the air bag 152 deploys it pushes against the pieces of material 172 and 174 which urge seam 140 apart. As can be appreciated, in this embodiment seam 140 is located as part of seam 130 at location A. The deployed air bag 152 is shown in phantom line for the purpose of illustration.

Reference is briefly made to figures 3A, 3B and 3C which show alternate mounting arrangements for the invention. As mentioned above, air bag 152, inflator 150 and various connecting components can be located under the seat cushion. In figure 3A, 3B and 3C, these components can be located on the exterior surface 270 of frame 105 that faces toward the front of the vehicle or the side of the vehicle. In figure 3A inflator 150 is mounted away from the underside of the seat on a forward facing surface 270a of the frame 105, while the air bag 152 and cover 170 are mounted on the sideways facing surface 270b of the frame. As can be seen from the various figures a portion of the air bag 152 extends out from its cover 170. A tether 272 is provided which can be secured to an adjacent portion of the frame thereby positioning this extending portion of the air bag. In figure 3A a typically rigid fill tube 154 connects the air bag and inflator. In figure 3B frame 105 includes an oblique surface 270c. Inflator 150 is secured to this surface. Fill tube 154 connects the inflator and air bag. In figure 3C, the air bag, inflator and fill tube are each mounted to the side facing surface of the frame. The fill tube 154 of figures 3B and 3C can be flexible hose.

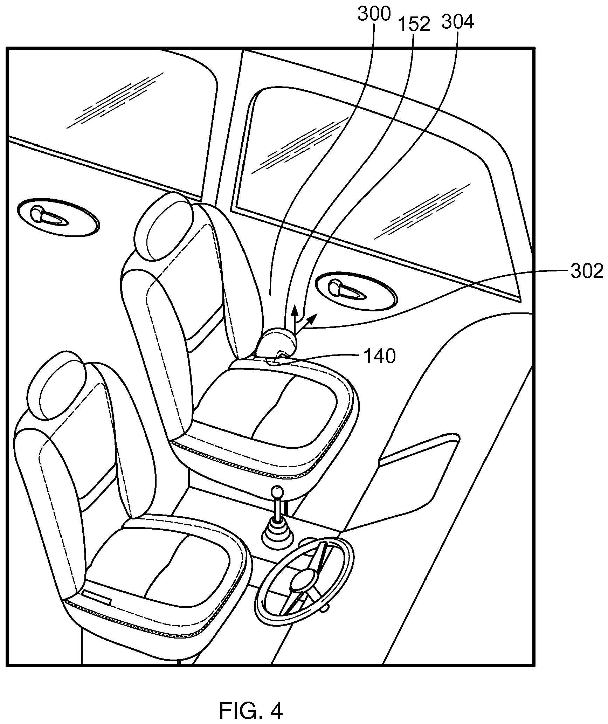

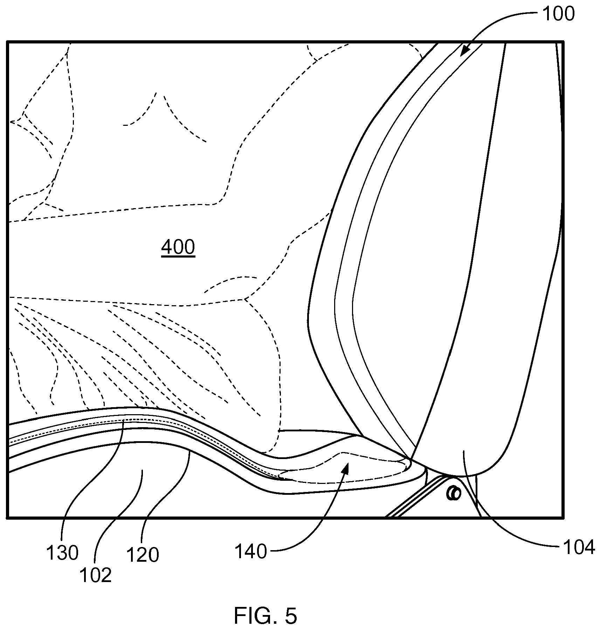

Reference is made to figures 4, 5 and 6 which are substantially identical to figure 3 with the exception of showing the pelvic bag 152 escaping from seam 140. As can be seen, bag 152 deploys out of the seat at a location close to the location of the occupant's outside facing hip (also shown in figure 5). Bag 152 reacts against the adjacent interior side 300 of the vehicle and also against the occupant, urging the occupant inwardly and away from the vehicle side which might be pushed inwardly during a side impact crash. The bag 152 may be designed to deploy at an angle, see arrow 302, relative to the horizontal or alternatively the air bag may deploy with a significant resultant upward component shown by arrow 304.

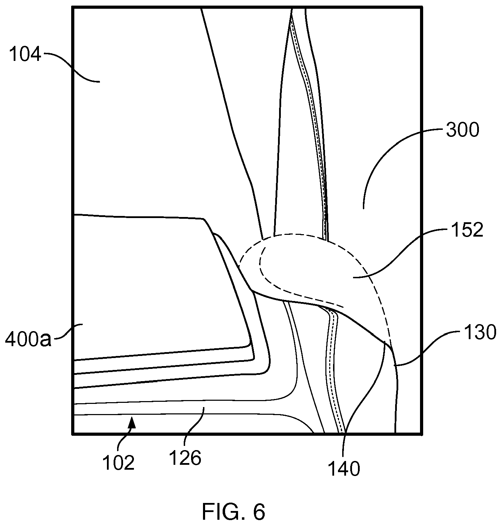

Reference is made to figures 5 and 6 which illustrate the deployment of pelvic bag 152 from seam 140. Figure 5 illustrates a crash dummy or occupant 400 seated on a typical front-row seat 100 (or rear seat) with a seat back and seat cushion 102, the cushion-bolster 120 is shown as well as the exterior of seam 130. As can be seen the tearable portion 140 of seam 130 is located adjacent the bottom of the seat back 104 which is often elevated above the seat cushion. In figure 5, the seam 140 has just begun to tear. Figure 6 shows air bag 152 in a partially deployed condition reacting against the vehicle interior sidewall 300 and increases in size, also urging the dummy (or occupant) 400 away from the sidewall. In figure 6 the anthropomorphic dummy or occupant shown in figure 5 has been replaced with a block form 400a primarily to be able to more clearly view the deploying air bag. The air bag 152 is seen in a partially deployed condition, deploying generally upward from its stored position against interior wall 300.

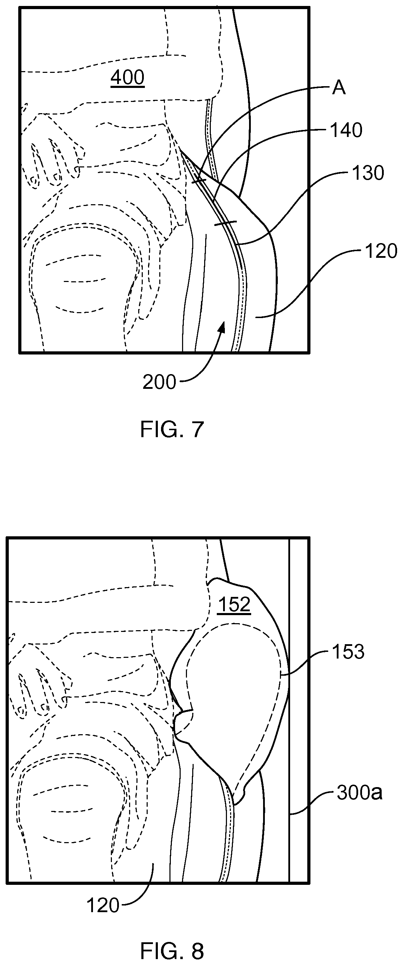

Figure 7 shows a similar dynamic with the dummy or occupant seated upon the seat cushion of a rear seat 200 prior to air bag deployment; the location of the deployable portion 140 of seam 130 is also shown. Figure 8 is a front view showing the deployment of pelvic bag 152 against a simulated vehicle side wall 300a urging the dummy 400 inwardly, away from sidewall 300a. Phantom line 153 diagrammatically shows the placement of a partially inflated air bag 152 at about 4 msec. after ignition, illustrating a significant improvement in the speed of placement of the pelvic bag in comparison to the prior art. As known to the inventor, pelvic protection air bags of the prior art deployed from the side bolster of the seat belt will achieve a similar position in about 8 msec.

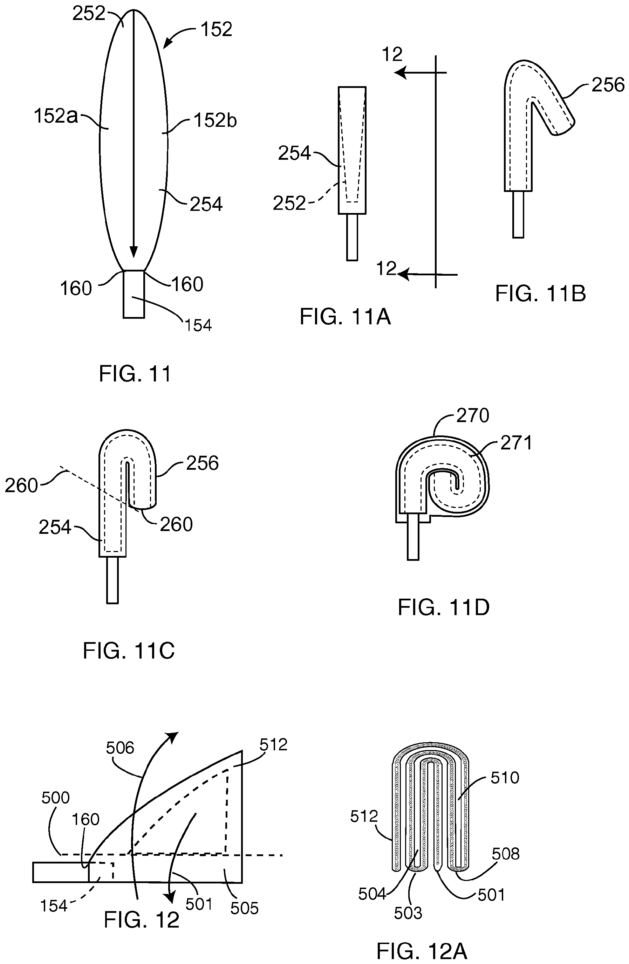

Figures 11 - 11D show a method of folding the air bag 152. In step 1, the top 252 of the air bag 152 is tucked within a lower portion 254 of the air bag; the resulting configuration is shown in figure 11A. In step 2 about 1/3 of the top portion 256 of the configuration shown in figure 11A is folded over as shown in figures 11B and 11C. The folding of the air bag is inward away from the outer side of the vehicle and toward the location of the seated occupant. Figure 11C shows the top portion 256 folded over and resting against the lower portion 254 of the air bag. The lower tip of the air bag is shown as point B. Thereafter the folded air bag, shown in figure 11C, is again folded over the fold line 260, the end of which approximately bisects the unfolded portion yielding the configuration of figure 11D. The folded air bag of figure 11D can be placed into the soft, flexible cover 270 to keep the fold in place. The cover 270 includes a tearable seam 271 often used with air bag covers and can be made of a number of different materials including woven air bag material or paper or Tyvek.

Reference is briefly made to figures 12 and 12A. Figure 12 is a plan view of the air bag shown in figure 11A. Numeral 500 illustrates a fold line 500 which, as illustrated, is located just about the fill tube 154. The placement of the fold line as illustrated will result in a bag that is folded compactly. As can be appreciated, if the fold line is raised, the folded bag will have a larger profile. Arrow 501 shows the direction air bag 152 is folded about fold line 500 to create the fold 504 shown in figure 12A. Numeral 505 shows the lower edge of the air bag. Air bag 152 is then folded about fold line 503 (only a tip end of which is visible in figure 12A) in the direction of arrow 506 back over the previously, partially folded bag. Then the bag is folded back over fold line 508 (only a tip end of which is visible in figure 12A) achieving the configuration in figure 12A. If additional material remains unfolded, this material it can be folded over the configuration in figure 12A. Numeral 512 shows a top portion of the air bag.

Many changes and modifications in the above-described embodiment of the invention can, of course, be carried out without departing from the scope thereof. Accordingly, that scope is intended to be limited only by the scope of the appended claims.

## Claims

1. A system comprising a vehicle seat (100, 200) having a seat back (104) and a seat cushion (102), a first portion (120) of the seat cushion (102) being adjacent an interior side wall of a vehicle (300), and an air bag (152) deployable out from the first portion (120) through a frangible tear seam (140), the air bag (152) being configured to become positioned upon deployment generally between a side of a pelvic region of the occupant and the side wall, said frangible tear seam (140) being located on said first portion (120) of the seat cushion (102) at a location (C) proximate the seat back (104), **characterized in that** said location is at a portion of a center upholstery seam (126).

2. The system according to claim 1 wherein the first portion (120) includes a bolster.

3. The system according to claim 1 wherein the air bag is in its folded configuration to deploy in a manner to push against a hip region of the occupant to move the occupant away from the side of the side wall.

4. The system according to claim 1 wherein the inflator is mounted in the seat below the seat cushion.

5. The system according to claim 1 wherein the air bag comprises two opposing panels of material (152a2, 152b).

6. The system according to claim 1 wherein the inflator and air bag are mounted relative to one another at a non-zero angle.

7. The system according to claim 1 wherein the inflator and air bag are mounted on a surface of a seat frame facing away from an underside of the seat.

8. The system according to claim 7 wherein the inflator is mounted to the seat frame proximate a bend or curve in the frame.

## Patentansprüche

1. System, umfassend einen Fahrzeugsitz (100, 200), besitzend eine Sitzrückenlehne (104) und ein Sitzkissen (102), wobei ein erster Abschnitt (120) des Sitzkissens (102) an eine innere Seitenwand eines Fahrzeugs (300) angrenzt, und einen Airbag (152), welcher aus dem ersten Abschnitt (120) durch eine Sollbruch-Aufreißnaht (140) entfaltet werden kann, wobei der Airbag (152) konfiguriert ist, um bei Entfaltung allgemein zwischen einer Seite einer Beckenregion des Insassen und der Seitenwand positioniert zu werden, wobei die Sollbruch-Aufreißnaht (140) an dem ersten Abschnitt (120) des Sitzkissens (102) an einer Stelle (C) in der Nähe der Sitzrückenlehne (104) angeordnet ist, **dadurch gekennzeichnet, dass** diese Stelle an einem Abschnitt einer mittleren Polsterungsnaht (126) liegt.

2. System nach Anspruch 1, bei welchem der erste Abschnitt (120) ein Polster einschließt.

3. System nach Anspruch 1, bei welchem der Airbag sich in seiner gefalteten Konfiguration befindet, um sich zu entfalten, sodass er gegen eine Hüftregion des Insassen drückt, um den Insassen von der Seitenwand weg zu bewegen.

4. System nach Anspruch 1, bei welchem die Aufblasvorrichtung im Sitz unterhalb des Sitzkissens montiert ist.

5. System nach Anspruch 1, bei welchem der Airbag zwei einandergegenüberliegende Paneele aus Material (152a2, 152b) beinhaltet.

6. System nach Anspruch 1, bei welchem die Aufblasvorrichtung und der Airbag in einem Winkel zueinander montiert sind, der nicht gleich null ist.

7. System nach Anspruch 1, bei welchem die Aufblasvorrichtung und der Airbag an einer Fläche eines Sitzrahmens montiert sind, welche von einer Unterseite des Sitzes abgewandt ist.

8. System nach Anspruch 7, bei welchem die Aufblasvorrichtung am Sitzrahmen in der Nähe einer Biegung oder Krümmung des Rahmens montiert ist.

## Revendications

1. Système comprenant un siège de véhicule (100, 200) comportant un dossier de siège (104) et une assise de siège (102), dont une première partie (120) est adjacente à une paroi latérale intérieure du véhicule (300), et un airbag pouvant se déployer à partir de la première partie (120) à travers une couture frangible de rupture(140), l'airbag (152) étant conçu pour se positionner lors du déploiement généralement entre un côté d'une région pelvienne de l'occupant et la paroi latérale, ladite couture frangible de rupture (140) étant située sur ladite première partie (120) de l'assise de siège (102) à un endroit (C) proche du dossier de siège (104), **caractérisé en ce que** ledit endroit est situé au niveau d'une partie d'une couture de capitonnage centrale (126).

2. Système selon la revendication 1, dans lequel la première partie (120) inclut un coussin d'appui.

3. Système selon la revendication 1, dans lequel l'airbag est dans une configuration pliée qui permet de le déployer de manière à pousser contre une région de la hanche de l'occupant afin de déplacer l'occupant à distance du côté de la paroi latérale.

4. Système selon la revendication 1, dans lequel le dispositif de gonflage est monté dans le siège en dessous de l'assise de siège.

5. Système selon la revendication 1, dans lequel l'airbag comprend deux panneaux opposés de toile (152a, 152b).

6. Système selon la revendication 1, dans lequel le dispositif de gonflage et l'airbag sont montés l'un par rapport à l'autre à un angle différent de zéro.

7. Système selon la revendication 1, dans lequel le dispositif de gonflage et l'airbag sont montés sur une surface d'un bâti de siège opposée au dessous du siège.

8. Système selon la revendication 7, dans lequel le dispositif de gonflage est monté sur le bâti de siège à proximité d'un pli ou d'une courbure dans le bâti.
